# EUROPEAN PATENT APPLICATION

(11) **EP 4 847 468 A1**
(43) Date of publication of application: **02.12.2026**
(21) Application number: 25882607.2
(22) Date of filing: 22.10.2025
(51) Int. Cl.: C04B 22/06, C04B 22/14, C04B 28/02, C04B 103/60

(54) **EXPANSION MATERIAL AND CEMENT CONCRETE**

(30) Priority: 25.10.2024 JP 2024188214
(71) Applicant: Denka Company Limited, Tokyo 103-8338 (JP)
(72) Inventor: MAEDA, Takumi, Tokyo 103-8338 (JP); HIGUCHI, Takayuki, Tokyo 103-8338 (JP); ITO, Shinya, Tokyo 103-8338 (JP)
(74) Representative: Gulde & Partner
(86) International application number: PCT/JP2025/037122
(87) International publication number: WO 2026/088979

(57) **Abstract**

An expansive additive has an L value in a Lab color space of 70 or more, preferably contains, as chemical components, CaO, SO₃, and Al₂O₃, wherein a total content of the components is preferably 90 mass% or more, and preferably contains, as a mineral composition, CaO, CaSO₄, and ye'elimite, wherein a total content of the composition is preferably 90 mass% or more.

## Description

### Technical Field

The present invention relates to an expansive additive and cement concrete.

### Background Art

Reduction of cracking in concrete is important from viewpoints such as reliability, durability, aesthetic appearance, and the like of civil engineering structures. Accordingly, further technological progress in expansive additives having an effect of improving these properties is desired.

As expansive additives, for example, free lime-hauyne-anhydrous gypsum-based expansive additives, free lime-calcium silicate-anhydrous gypsum-based expansive additives, and the like are generally known, and, recently, high-performance expansive additives capable of reducing cracking of concrete with an addition amount smaller than conventional addition amounts have also been developed (see, for example, Patent Literature 1 and Patent Literature 2).

### Citation List

### Patent Literature

Patent Literature 1: JP H07-232944 A
Patent Literature 2: JP 2002-226243 A

### Summary of Invention

### Technical Problem

In recent years, use of expansive additives for the purpose of suppressing cracking has been increasing not only in the civil engineering field but also in various concrete structures and concrete products including those in the architectural field.

As expansive additives are applied to various uses, attention has also increasingly been paid to the color tone of the appearance of concrete. For example, demand for concrete having high whiteness is increasing, and, in this case, an expansive additive having not only a high expansion ratio but also high whiteness would allow such demand to be met and would be extremely significant.

In view of the above, an object of the present invention is to provide an expansive additive having high whiteness and good expansion performance.

### Solution to Problem

As a result of diligent studies to solve the above problems, the present inventors conceived of the following present invention and found that the problems can be solved. Specifically, the present invention is as follows.

[1] An expansive additive having an L value in a Lab color space of 70 or more.
[2] The expansive additive according to [1], containing, as chemical components, CaO, SO₃, and Al₂O₃, wherein a total content of the components is 90 mass% or more.
[3] The expansive additive according to [1] or [2], containing, as a mineral composition, CaO, CaSO₄, and ye'elimite, wherein a total content of the composition is 90 mass% or more.
[4] A cement concrete including the expansive additive according to any one of [1] to [3] and cement.

### Advantageous Effects of Invention

According to the present invention, an expansive additive having high whiteness and good expansion performance can be provided.

### Description of Embodiments

Hereinafter, one embodiment of the present invention (the present embodiment) will be described in detail.

### [Expansive Additive]

The expansive additive according to the present embodiment has an L value in a Lab color space of 70 or more. When the L value is 70 or more, an expansive additive having high whiteness can be obtained. Further, inclusion in cement concrete allows good expansion performance to be exhibited. Furthermore, when used in white concrete, the expansive additive can reduce shrinkage and improve appearance and durability while maintaining the white color of the white concrete.

To set the L value to 70 or more, a high-purity material may be used as a material for preparing the expansive additive. The higher the purity is, the larger the L value can be. The L value is preferably 80 or more, more preferably 90 or more.

The L value can be measured by the method described in Examples.

In the expansive additive according to the present embodiment, an a value in the Lab color space is preferably -1 to 2, and a b value is preferably 1 to 15.

In the expansive additive of the present embodiment, the expansive additive preferably contains, as chemical components, CaO, SO₃, and Al₂O₃, and a total content of the components is preferably 90 mass% or more, more preferably 95 mass% or more, and still more preferably 98 mass% or more. When the total content is 90 mass% or more, excellent expansion performance is exhibited, and whiteness can be increased.

The chemical components can be measured by X-ray fluorescence analysis.

Regarding the chemical components, the content of CaO is preferably 40 to 80 mass% and preferably 50 to 70 mass% from the viewpoint of expansion performance. The content of SO₃ is preferably 13 to 50 mass% and preferably 20 to 35 mass% from the viewpoints of expansion performance and appropriate control of reaction time. Further, the content of Al₂O₃ is preferably 1 to 20 mass% and preferably 5 to 15 mass% from the viewpoint of appropriate control of reaction time.

Further, the expansive additive according to the present embodiment preferably contains, as a mineral composition, CaO, CaSO₄, and ye'elimite, and a total content of the composition is preferably 90 mass% or more, more preferably 93 mass% or more, and still more preferably 95 mass% or more. When the total content is 90 mass% or more, excellent expansion performance is exhibited, and whiteness can be increased.

The mineral composition can be measured by powder X-ray diffraction Rietveld analysis. Further, mineral amounts can also be determined by calculation based on the obtained results of chemical components.

Regarding the mineral composition, the content of CaO is preferably 10 to 60 mass% and preferably 20 to 50 mass% from the viewpoint of expansion performance. The content of CaSO₄ is preferably 15 to 60 mass% and preferably 30 to 55 mass% from the viewpoints of expansion performance and appropriate control of reaction time. Further, the content of ye'elimite is preferably 1 to 35 mass% and preferably 5 to 30 mass% from the viewpoint of appropriate control of reaction time.

Furthermore, regarding the Blaine specific surface area of the expansive additive according to the present embodiment, from the viewpoint of obtaining good expansion characteristics, the Blaine specific surface area of the expansive additive is preferably 2,000 to 7,000 cm²/g, more preferably 3,000 to 4,000 cm²/g.

In the present specification, the Blaine specific surface area is determined in accordance with JIS R 5201 (Physical Testing Methods for Cement).

The expansive additive as described above can be used as is in various applications or can be used after being mixed with another material, but is preferably for an application in which the expansive additive is mixed into cement concrete.

### [Cement Concrete]

The cement concrete according to the present embodiment includes the expansive additive of the present invention and cement.

In the present embodiment, the term cement concrete is a generic term for cement, cement paste, mortar, and concrete.

The content of the expansive additive of the present invention is preferably 3 to 15 parts by mass, more preferably 5 to 12 parts by mass, relative to 100 parts by mass of cement in the cement concrete. Setting the content to 3 to 15 parts by mass can reduce cracking of a hardened cement body.

The cement used in the present embodiment is not particularly limited, and examples include ordinary, high-early-strength, ultra-high-early-strength, low-heat, moderate-heat, and other various cements; various blended cements obtained by mixing blast-furnace slag, fly ash, silica fume, or the like into these cements; environmentally harmonious cement (eco-cement) manufactured using municipal solid waste incineration ash or sewage sludge incineration ash as a raw material; siliceous substances such as metakaolin and calcined white clay ash; limestone fine powder, synthetic calcium carbonate, commercially available fine-particle cement, and the like, and various cements and various blended cements can also be used after being pulverized into a fine powder. In addition, materials adjusted by increasing or decreasing an amount of a component normally used in cement (for example, gypsum or the like) can also be used. In the present embodiment, ordinary Portland cement or high-early-strength Portland cement is preferably selected from the viewpoints of heat of hydration, drying shrinkage, and filling property.

Further, from the viewpoints of production cost and strength development property, the Blaine specific surface area of cement is preferably 2,500 to 7,000 cm²/g, more preferably 2,750 to 6,000 cm²/g.

Examples of fine aggregate used in the present embodiment include river sand, mountain sand, land sand, sea sand, silica sand, crushed sand, limestone crushed sand, blast-furnace slag fine aggregate, recycled fine aggregate, and the like. The type and content of fine aggregate may be selected according to target mechanical strength of a hardened cement concrete body.

Examples of coarse aggregate used in the present embodiment include crushed stone obtained by crushing andesite, rhyolite, hard sandstone, limestone, and the like, river gravel, mountain gravel, land gravel, blast-furnace slag coarse aggregate, and recycled coarse aggregate. The rock type, size, and content of coarse aggregate may be selected according to target mechanical strength of a hardened cement concrete body.

In the present embodiment, various additives may be contained. Examples include water-reducing agents, air-entraining (AE) agents, foaming agents, shrinkage-reducing agents, waterproofing agents, corrosion inhibitors, thickening agents, polymers, water-retaining agents, pigments, water-repellent agents, efflorescence-preventing agents, and the like.

### Examples

The present invention will be specifically described below by Examples, but the present invention is not limited to these Examples.

### (Preparation of Expansive Additive)

Calcium carbonate, calcium sulfate dihydrate, and aluminum oxide were mixed so that chemical components had the contents shown in Table 1, and further, silicon dioxide and magnesium oxide were mixed as trace components for adjusting expansive additive purity. After mixing, the mixture was heat-treated in a small electric furnace at 1,350°C for 2 hours, left to cool to room temperature, and pulverized using a ball mill so that the Blaine value was about 3,300 cm²/g, thereby preparing expansive additives according to Examples.

For the prepared expansive additives, mineral composition was measured by Rietveld analysis of powder X-ray diffraction. The results are shown in Table 1.

### - Raw materials used

Calcium carbonate: first-grade reagent, commercially available product
Calcium sulfate dihydrate: first-grade reagent, commercially available product
Aluminum oxide: first-grade reagent, commercially available product
Silicon dioxide: first-grade reagent, commercially available product
Magnesium oxide: first-grade reagent, commercially available product

### (Color Difference Measurement of Expansive Additive)

A commercially available portable color difference meter was used for color measurement of the expansive additive. The portable color difference meter was calibrated in advance using a calibration instrument so that, for white, the lightness L value was 100 and the a value and b value of hue and chroma were 0, and so that, for black, the lightness L value and all of the a value and b value of hue and chroma were 0. Thereafter, after powder of the expansive additive was adjusted to a flat state with a glass plate so that irregularities did not occur, the measurement port of a portable color difference meter was brought into contact with the powder to an extent that the powder did not collapse, and the lightness L value and the a value and b value of hue and chroma were measured.

### (Measurement of Expansion Ratio)

45 g of the prepared expansive additive, 225 g of water, 405 g of cement, and 1350 g of fine aggregate were mixed, and a mortar composition was kneaded with a mortar mix proportion providing a water-binder ratio of 50%. For the obtained mortar composition, expansion ratios after curing for 7 days and 28 days were measured based on JIS A 6202 (Testing Method for Expansive Additive for Concrete).

In addition, except that cement was 450 g and no expansive additive was contained, a mortar composition for comparison was prepared in the same manner as the above mortar composition, and expansion ratios after curing for 7 days and 28 days were measured in the same manner as above (Comparative Example 1). The results are shown in the table below.

Considering drying shrinkage cracking, the expansion ratio is preferably 250 × 10⁻⁶ to 2,000 × 10⁻⁶ after 7 days, and is preferably -150 × 10⁻⁶ to 1,500 × 10⁻⁶ after 28 days.

### - Materials used

Water: tap water
Cement: ordinary Portland cement compliant with JIS R 5210:2019, commercially available product
Fine aggregate: standard sand for cement strength testing compliant with JIS R 5201, commercially available product

**[Table 1]**

| | | | Example 1 | Example 2 | Example 3 | Example 4 | Example 5 | Example 6 | Comparative Example 1 |
|---|---|---|---|---|---|---|---|---|---|
| Expansive additive | Chemical components (mass%) | CaO | 51.8 | 56.5 | 61.2 | 72.5 | 55.4 | 69.4 | - |
| | | SO3 | 34.6 | 29.8 | 25.1 | 14.9 | 26.7 | 21.2 | - |
| | | Al2O3 | 12.9 | 12.9 | 12.9 | 11.9 | 13.9 | 6.2 | - |
| | | Total of three components | 99.3 | 99.2 | 99.2 | 99.3 | 96.0 | 96.7 | - |
| | | Others | 0.7 | 0.8 | 0.8 | 0.7 | 4.0 | 3.3 | - |
| | Mineral composition (mass%) | CaO | 17.4 | 26.7 | 36.2 | 54.8 | 18.2 | 40.6 | - |
| | | CaSO4 | 55.9 | 43.8 | 38.0 | 19.8 | 48.8 | 34.1 | - |
| | | Ye'elimite | 23.8 | 26.9 | 25.2 | 24.8 | 23.0 | 12.2 | - |
| | | Total of three components | 97.1 | 97.4 | 99.4 | 99.4 | 90.0 | 86.9 | - |
| | | Others | 2.9 | 2.6 | 0.6 | 0.6 | 10.1 | 13.1 | - |
| | Color difference | L value | 91.24 | 93.22 | 93.66 | 90.01 | 83.46 | 80.72 | - |
| | | a value | -0.44 | -0.51 | -0.37 | -0.48 | 0.91 | 0.23 | - |
| | | b value | 2.77 | 2.49 | 2.07 | 1.90 | 8.26 | 12.59 | - |
| Expansion ratio (x 10⁻⁶) | | Age of 7 davs | 730 | 1210 | 890 | 1600 | 640 | 1070 | 5 |
| | | Age of 28 davs | 370 | 850 | 520 | 1250 | 220 | 680 | -450 |

## Claims

1. An expansive additive having an L value in a Lab color space of 70 or more.

2. The expansive additive according to claim 1, comprising, as chemical components, CaO, SO₃, and Al₂O₃, wherein a total content of the components is 90 mass% or more.

3. The expansive additive according to claim 1, comprising, as a mineral composition, CaO, CaSO₄, and ye'elimite, wherein a total content of the composition is 90 mass% or more.

4. A cement concrete comprising the expansive additive according to any one of claims 1 to 3 and cement.
